# EUROPÄISCHE PATENTSCHRIFT

(11) **EP 2 807 013 B1**
(45) Veröffentlichungstag und Bekanntmachung des Hinweises auf die Patenterteilung: **30.03.2016**
(21) Anmeldenummer: 13702777.7
(22) Anmeldetag: 26.01.2013
(51) Int. Cl.: B29C 47/68, B29C 47/08, B01D 29/41, B01D 29/96

(54) **FILTRIERVORRICHTUNG ZUR GROßFLÄCHENFILTRATION VON FLUIDEN**
FILTERING DEVICE FOR THE LARGE-AREA FILTRATION OF FLUIDS
DISPOSITIF DE FILTRATION POUR LA FILTRATION À GRANDE SURFACE DE FLUIDES

(30) Priorität: 26.01.2012 DE 102012100641
(43) Veröffentlichungstag der Anmeldung: 03.12.2014
(73) Patentinhaber: Nordson Holdings S.à r.l. & Co. KG, 40699 Erkrath (DE)
(72) Erfinder: HARTMANN, Frank, 48565 Steinfurt (DE); SCHRÖDER, Christian, 48159 Münster (DE)
(74) Vertreter: Eisenführ Speiser
(86) Internationale Anmeldenummer: PCT/EP2013/051521
(87) Internationale Veröffentlichungsnummer: WO 2013/110800

(56) Entgegenhaltungen:
- EP-A1- 1 502 724
- WO-A1-98/22198
- WO-A2-2011/086173
- DE-C1- 4 420 119
- US-A- 5 618 423

## Beschreibung

Die Erfindung betrifft eine Filtriervorrichtung zur Großflächenfiltration von Fluiden, die wenigstens umfasst:
- ein Gehäuse mit wenigstens einem Eintrittskanal und wenigstens einem Austrittskanal und
- ein längs zu einer Gehäusebohrung verschiebbares Filterträgerelement mit wenigstens einem Filtereinsatz , welcher in einer Produktionsstellung in einer Filter-kammer zwischen dem Eintrittskanal und dem Austrittskanal des Gehäuses anzuordnen ist,
- wobei der Filtereinsatz ein durchströmbares Basiselement aufweist, aus dem heraus ein Fluidstrom auf mehrere Einzelfilterelemente verzweigt bzw. in welchem mehrere Fluidströme aus den Einzelfilterelementen vereinigt werden.

Bei Filtriervorrichtungen der genannten Art durchströmt die Kunststoffschmelze bei Temperaturen bis zu 350°C und Drücken bis zu 300 bar in ein in einem zylinderförmigen Filtergehäuse angeordnetes Filtereinsatzelement, das als Großflächenfilter in Form von Scheiben- oder Kerzenfiltern ausgeführt ist.

Derartige Großflächenfilter in Form eines Doppelfilters sind aus der DE-C-19823765 oder der DE-A-102005061770 bekannt. Bei diesen Ausführungsformen kann jeder einzelne Filter mit seinem zylinderrohrförmigen Filtergehäuse aus seiner Arbeitsposition herausgeschwenkt werden, um dann die Filtereinsätze zum Filterwechsel nach oben herauszuziehen. Beide Filter sind bei diesen Ausführungsformen an ein tragendes Säulengestell angeschraubt bzw. über die Umschaltventile miteinander starr verbunden. Die Filtergehäuse sind über die Ventile oder ein tragendes Säulengestell miteinander verbunden. Hierdurch ist ein Wechsel des Filtereinsatzes bzw. eine Reinigung erschwert, da die Temperatur sowohl des Filtergehäuses als auch der übrigen Vorrichtung nicht beibehalten werden kann.

Werden Kunststoffschmelzen gefiltert, so führen die hohen Verarbeitungstemperaturen zu erheblichen Wärmedehnungen in den Filterbauteilen. Hierdurch kommt es zu Spannungen und Verschiebungen in der modular aufgebauten Ausführung eines derartigen Doppelfilters mit der Gefahr von Leckagestellen an den Kontaktstellen der Materialfließkanäle in verschiedenen Bauteilen. Dieses grundsätzliche Problem kann durch den Lösungsvorschlag der DE-A-102005061770 nicht gelöst werden, weil zum Filterwechsel immer ein beheizter Filtereinsatz vorhanden sein muss, der die gleiche Temperatur aufweist wie das Gehäuse. Ist dies nicht der Fall, so können wärmedehnungsbedingt die Fließkanalanschlüsse des Filtereinsatzes nicht passgenau zu den Fließkanälen des Gehäuses ausgerichtet und dichtend verschraubt werden.

Derartige Großflächenfilter in Form eines Doppelfilters sind aus der DE-C-19823765 oder der DE-A-102005061770 bekannt. Bei diesen Ausführungsformen kann jeder einzelne Filter mit seinem zylinderrohrförmigen Filtergehäuse aus seiner Arbeitsposition herausgeschwenkt werden, um dann die Filtereinsätze zum Filterwechsel nach oben herauszuziehen. Beide Filter sind bei diesen Ausführungsformen an ein tragendes Säülengestell angeschraubt bzw. über die Umschaltventile miteinander starr verbunden. Die Filtergehäuse sind über die Ventile oder ein tragendes Säulengestell miteinander verbunden. Hierdurch ist ein Wechsel des Filtereinsatzes bzw. eine Reinigung erschwert, da die Temperatur sowohl des Filtergehäuses als auch der übrigen Vorrichtung nicht beibehalten werden kann.

Werden Kunststoffschmelzen gefiltert, so führen die hohen Verarbeitungstemperaturen zu erheblichen Wärmedehnungen in den Filterbauteilen. Hierdurch kommt es zu Spannungen und Verschiebungen in der modular aufgebauten Ausführung eines derartigen Doppelfilters mit der Gefahr von Leckagestellen an den Kontaktstellen der Materialfließkanäle in verschiedenen Bauteilen. Dieses grundsätzliche Problem kann durch den Lösungsvorschlag der DE-A-102005061770 nicht gelöst werden, weil zum Filterwechsel immer ein beheizter Filtereinsatz vorhanden sein muss, der die gleiche Temperatur aufweist wie das Gehäuse. Ist dies nicht der Fall, so können wärmedehnungsbedingt die Fließkanalanschlüsse des Filtereinsatzes nicht passgenau zu den Fließkanälen des Gehäuses ausgerichtet und dichtend verschraubt werden.

Aus der EP 1 502 724 B1 und der DE 44 20 119 C1 sind jeweils Filtriervorrichtungen bekannt, bei denen die Filterelemente in bolzenförmigen Trägerelementen angeordnet sind. Die bolzenförmigen Trägerelemente sind quer zur Fließrichtung verschiebbar und können aus der Bohrung, welche sich vollständig durch das Gehäuse hindurch erstreckt, herausgeschoben werden. Aufgrund der zwischen der Außenseite des Bolzens und dem Innenmantel der Bohrung stets vorhandenen Spiels werden die Spaltmaße fertigungsbedingt mit zunehmendem Durchmesser immer größer, sodass eine beliebige Erweiterung des Durchsatzvolumens bei dieser Bauart nicht möglich ist. Eine weitere Begrenzung findet die Bauart durch das hohe Eigengewicht der Filterträgerbolzen, sodass diese in der Regel nur horizontal gelagert werden können, damit der hydraulische Antrieb lediglich gegen die Reibungskräfte arbeiten muss und nicht auch noch gegen die Massekräfte der Bolzen.

Der vorliegenden Erfindung liegt daher die Aufgabe zugrunde, eine Filtriervorrichtung zur Großflächenfiltration insbesondere von Kunststoffschmelzen zu schaffen, welche einfach zu reinigen ist und bei der ein Filtereinsatz schnell und sicher ausgewechselt werden kann. Zudem soll die Filtriervorrichtung einen Aufbau aufweisen, der sich homogen beheizen lässt, um Montage- und Leckageprobleme durch unterschiedliche Wärmedehnungen zu vermeiden.

Die Aufgaben werden durch eine Filtriervorrichtung zur Großflächenfiltration von Fluiden, insbesondere von Kunststoffschmelzen, mit den Merkmalen des Anspruchs 1 gelöst.

Wesentlich ist, dass die Filtriervorrichtung wenigstens eine Antriebseinheit und ein massives Filtergehäuse mit Filterkammer umfasst, wobei der Filtereinsatz durch eine translatorische Bewegung in eine Bohrung im Gehäuse einzubringen ist und ein Verschlusselement am Filtereinsatz die Bohrung abschließt, wodurch eine geschlossene Filterkammer erst ausgebildet.

Mit der Antriebseinheit ist eine einfache Wartung und Reinigung des Filtereinsatzes möglich. Hierdurch kann der Filtereinsatz ein- und ausgebaut und es kann eine Reinigung der Filterkammer vorgenommen werden, ohne die Temperatur im massiven Gehäuse absenken zu müssen.

Vorzugsweise ist das Gehäuse homogen temperierbar. In einer bevorzugten Ausführungsform sind im massiven Gehäuse Temperierbohrungen für eine homogene Beheizung vorgesehen. Die Beheizung kann hydraulisch oder elektrisch sowie über eine Dampfbeheizung erfolgen.

Die erfindungsgemäße Filtriervorrichtung ist vorzugsweise für Kunststoffschmelzen geeignet, beispielsweise für Polyester, Polyether oder Polyamide.

Die erfindungsgemäße Filtriervorrichtung ist geeignet für Schmelzen in einem Temperaturbereich bis 350 °C, vorzugsweise von 10° bis 350°C, bevorzugt von 10° bis 300 °C.

In einer bevorzugten Ausführungsform umfasst die Erfindung an das Filtergehäuse anschraubbare bzw. in das Gehäuse einbaubare Umschaltventile, mit denen der Schmelzefluss über die Fließkanalanschlüsse zum Filter freigegeben oder abgesperrt werden kann. Sie sind jeweils dem Ein- bzw. Austrittskanal zugeordnet.

In einer besonderen Ausführung sind die Ventile derart gestaltet, dass der Filtereinsatz durch eine Rückspülfunktion mit Strömungsumkehr im Filtereinsatz gereinigt werden kann. Hierzu sind in Umschaltventil und Gehäuse Rückspülbohrungen untergebracht, über die der Schmutzkuchen vom Filtermedium nach außen abgeführt werden kann.

Die erfindungsgemäße Filtriervorrichtung kann in kontinuierlicher oder diskontinuierlicher Arbeitsweise eingesetzt werden.

Die Filtriervorrichtung kann in einer ersten bevorzugten Ausführung als einfacher, diskontinuierlich arbeitender Filter fungieren, indem das Filtergehäuse als massives Gehäuse mit nur einer Filterkammer für einen einzelnen Filtereinsatz sowie mit einer angebauten Antriebseinheit zum einfachen Filterwechsel ausgeführt wird. Diese Konstruktionsform erlaubt den Verzicht auf den Einsatz von Ventilen zum Absperren oder Freigeben des Schmelzestromes durch den Filter, sofern wenn die Anlage zum Filteraustausch abgeschaltet werden kann.

In einer weiteren bevorzugten Ausführungsform kann die Filtriervorrichtung als kontinuierlich arbeitender Mehrfachfilter, insbesondere als Doppelfilter, einen einfachen, massiven Aufbau aufweisen, der sich sehr homogen beheizen lässt, um Montage- und Leckageprobleme durch unterschiedliche Wärmedehnungen zu vermeiden.

In einer bevorzugten Ausführung wird ein solcher Doppelfilter in einer Parallelschaltung zweier Filtereinsätze betrieben, um bei dem Wechsel eines Filtereinsatzes ohne Produktionsunterbrechung arbeiten zu können.

In einer weiteren Ausführung ist auch die Reihenschaltung zweier oder mehrerer Filter denkbar, um beispielsweise eine Stufenfiltration zu erreichen, bei der in einem ersten Filtereinsatz grob filtriert und in einem zweiten Filtereinsatz fein filtriert wird.

Von der Bauweise her handelt es sich bei Doppel- und Mehrfachfiltern um aneinandergereihte erfindungsgemäße Filtriervorrichtungen in der oben beschriebenen Grundbauweise, die jedoch bevorzugt ein gemeinsames Gehäuse aufweisen.

Vorzugsweise verfügen die Mehrfach-Filtriervorrichtungen über Umschaltventile, um die Verteilung der Fluidströme je nach der gewünschten Betriebsweise steuern zu können.

Ein Doppelfilter kann als kontinuierlich arbeitendes Filtrationssystem mit zwei parallel geschalteten Filtereinsätzen mit zwei unterschiedlichen Funktionsweisen betrieben werden:
Zum einen können in der Produktion grundsätzlich beide Filtereinsätze für die Filtration genutzt werden. Wenn nach einiger Zeit infolge der Verschmutzung der Filterelemente ein Austausch derselben erfolgen muss, wird zunächst ein Filtereinsatz mittels der Ventile vom Schmelzeeintritt und Schmelzeaustritt getrennt, der andere aber in Produktion gehalten. Somit kann der erste Filtereinsatz ohne Produktionsunterbrechung gewechselt werden. Nach abgeschlossenem Filteraustausch wird der neue Filtereinsatz mit Hilfe der Ventile in Produktion genommen, der zweite verbrauchte Einsatz in gleicher Weise von der Produktion getrennt, um auch diesen ersetzen zu können. Wenn beide Filterelemente ausgetauscht sind, kann wieder die Produktion über beide Filtereinsätze erfolgen.

Zum anderen kann nur einer der Filtereinsätze einer Doppel-Filtriervorrichtung für die Filtration genutzt werden. Der zweite Filtereinsatz befindet sich ungenutzt in einer Wartestellung in der zweiten Filterkammer. Sobald der in Produktion befindliche Filtereinsatz verschmutz ist und ausgetauscht werden muss, kann mittels der Ventile auf den einsatzbereiten, in Wartestellung befindlichen zweiten Filtereinsatz der Doppel-Filtriervorrichtung umgeschaltet werden.

Dadurch, dass die Gehäuse eines diskontinuierlich arbeitenden Einzelfilters wie auch eines kontinuierlich arbeitenden Mehrfachfilters, insbesondere Doppelfilters, massiv ausgeführt und vorzugsweise mit einer geeigneten Beheizung für eine dauerhaft homogene Temperaturführung bei der Filtrierung von Kunststoffschmelzen versehen sind, kann ein Austausch der Filtereinsätze jederzeit erfolgen. Es kommt also nicht zu Wartezeiten, um Gehäuseteile aufzuheizen, damit sie anschließend passgenau miteinander verschraubt werden können.

Der Ausbau bzw. Austausch eines Filtereinsatzes kann sehr einfach gestaltet werden, da das Filterträgerelement mit dem Filtereinsatz lediglich mit der Antriebseinheit, beispielsweise einem Hydraulikzylinder, aus dem Gehäuse herausgefahren werden muss.

Vorzugsweise fluchten die Achsen des Filterträgerelements, des daran angesetzten Filtereinsatzes und der Filterkammer. Der Einsatz der Antriebseinheit erlaubt somit eine Entnahme des Filtereinsatzes ohne Einbringen von Querkräften in denselben, weil die Zugkraft in Längsachse des Filtereinsatzes wirkt. Bei bekannten Großflächenfiltern hingegen werden die Filtereinsätze in aller Regel mit einem Kran aus dem Gehäuse gehoben, was zu schräg eingeleiteten Kräften mit der Gefahr von Beschädigungen für den Filtereinsatz verbunden sein kann.

Darüber hinaus kann die zur Verschiebung des Filterträgerelements vorgesehene Antriebseinheit dazu genutzt werden, die Filterkammer von Schmelze zu reinigen. Hierzu werden Reinigungsschaber, Bürsten oder etwaige andere Reinigungsgeräte an die Antriebseinheit angebaut und mit dieser in der Filterkammer auf- und abbewegt. Dies führt zu einer einfachen, effizienten und für das Bedienpersonal gefahrlosen Reinigung der Bohrung, da diese im heißen Gehäuse maschinell erfolgen kann.

Die Funktion der Ventile, die vorteilhafterweise an einen Mehrfachfilter, beispielsweise an einen Doppelfilter, angebaut werden können oder in einer anderen Bauform direkt in das massive Gehäuse integriert sein können, liegt darin, die Schmelzezufuhr zu bzw. die Schmelzeabfuhr wahlweise von der einen oder der anderen Filterkammer des Gehäuses freizugeben. In einer Mittelstellung des Ventils kann der Materialfluss über beide Filterkammern des Gehäuses geleitet werden.

Bei einer Sonderform des Umschaltventils kann durch zusätzliche Bohrungen in Ventilbolzen und im Gehäuse eine Rückspülfunktion zur Selbstreinigung der Filtriervorrichtung vorgesehen werden. Hierzu wird das Eintrittsventil in eine Position gefahren, in der die Materialzufuhr zur Filterkammer, welche rückgespült werden soll, unterbrochen wird. Stattdessen wird die Rückspülbohrung im Eintrittsventil in eine hydraulische Verbindung mit dieser Filterkammer gebracht und gleichzeitig auf der Austrittsseite die Verbindung zum Austrittskanal aufrecht erhalten. Hierdurch wird in der rückzuspülenden Filterkammer eine Strömungsumkehr bewirkt, bei der die Schmelze von der Reinseite des Filtereinsatzes durch das Filtermedium hindurch zur Schmutzseite des Filtereinsatzes fließt, den Schmutzkuchen vom Filtermedium abhebt und über die Rückspülbohrung im Eintrittsventil nach außen zur Gehäuseaußenseite hin abführt.

Der gleiche Rückspülvorgang kann vorteilhafterweise derart gestaltet sein, dass im Eintrittsventil auf die Rückspülbohrung verzichtet und stattdessen eine mit einem Stopfen bzw. einem einfachen Sperrventil verschließbare Rückspülbohrung direkt in die Filterkammer eingebracht wird. Zur Rückspülung muss dann mit einem solchen einfacheren Eintrittsventil der Zufluss zur Filterkammer abgesperrt und austrittsseitig die Fließverbindung aufrechterhalten werden. Eine Öffnung der Rückspülbohrung der Filterkammer durch Entfernen des Stopfens oder durch Öffnen eines einfachen Ventils bewirkt die Strömungsumkehr in der Filterkammer mit dem damit einhergehenden Reinigungseffekt des Filtermediums.

Die Fließrichtung bei der erfindungsgemäßen Filtriervorrichtung ist allein durch die Art der Filtereinsätze bestimmt. Gestapelte Scheibenfilter werden üblicherweise von außen nach innen durchströmt, um eine Aufweitung infolge des hohen anstehende Druckes zu verhindern. Ansonsten sind die bei den nachfolgend beschriebenen Ausführungsformen genannten Fließrichtungen auch umkehrbar.

Die Erfindung wird nachfolgend mit Bezug auf die Zeichnung näher erläutert. Die Figuren zeigen im Einzelnen:
- Fig. 1: eine Vorderansicht einer einfachen, diskontinuierlich arbeitenden Großflächenfiltriervorrichtung mit ausgefahrenem Filtereinsatz;
- Fig. 2: einen Vertikalschnitt durch die Filtriervorrichtung gemäß Fig. 1;
- Fig. 3: eine Vorderansicht einer DoppelFiltriervorrichtung;
- Fig. 4: einen Vertikalschnitt der DoppelFiltriervorrichtung gemäß Fig. 3;
- Fig. 5: einen vertikalen Schnitt durch Gehäuse, Filtereinsatz und Umschaltventil;
- Fig.6a -6d: je einen horizontalen Schnitt durch Gehäuse und Austrittsventil neben einem Schnitt durch Gehäuse und Eintrittsventil in verschiedenen Betriebszuständen der DoppelFiltriervorrichtung.

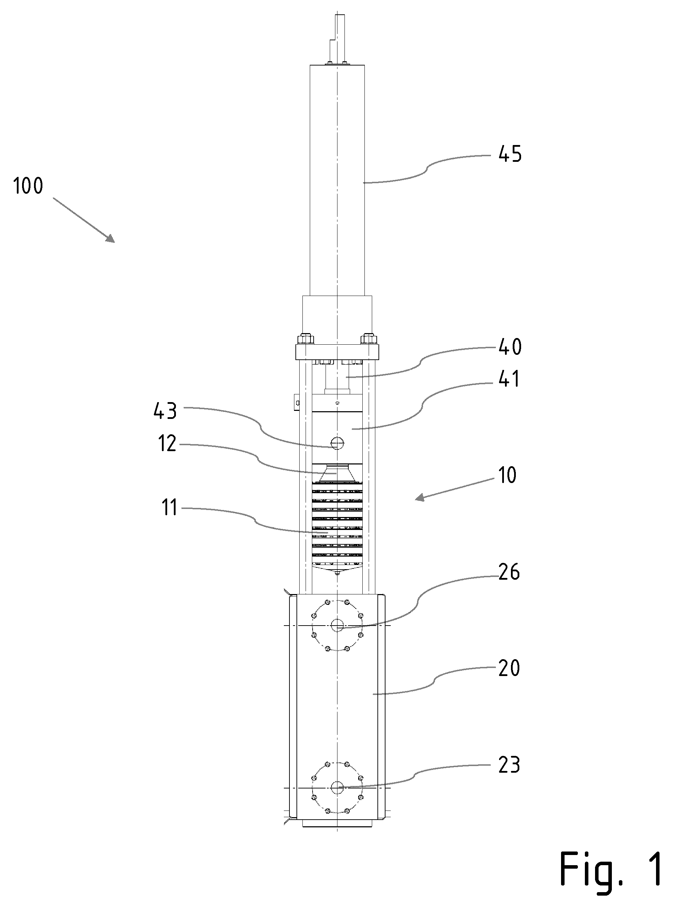

Eine einfache Filtriervorrichtung 100 gemäß der Erfindung, die diskontinuierlich betrieben wird, ist in Figur 1 gezeigt.

Sie weist ein Filtergehäuse 20 mit einem Eintrittskanal 23, einem Austrittskanal 26 und einer innen liegenden Filterkammer auf. Weiterhin sind im Gehäuse 20 Temperierbohrungen zur Aufnahme elektrischer Heizpatronen vorgesehen, um eine homogene Temperierung des gesamten Gehäuses 20 zu ermöglichen.

Eine angebaute Antriebseinheit 45 umfasst beim dargestellten Ausführungsbeispiel einen hydraulisch zu betreibenden Zylinder, über den ein Filterträgerelement 40 axial verschoben werden kann.

Das Filterträgerelement 40 trägt an seiner unteren Stirnseite einen Filtereinsatz 10, der bei dem dargestellten Ausführungsbeispiel baumkuchenartig mit einem zentralen, durchströmbaren Stützprofil 12 und einer Vielzahl von darauf gestapelten Scheibenfilterelementen 11, sogenannten Leaf-Disc-Filterelementen, gebildet ist. Die einzelnen Scheibenfilterelemente 11 besitzen jeweils eine Umhüllung aus metallischem Filtergewebe, das durch ein Stützgerüst aufgespannt ist, so dass ein Hohlraum gebildet wird. Das Fluid, das das Filtergewebe passiert hat, fließt aus dem aufgespannten Hohlraum in das zentrale Stützprofil 12, wie an sich bekannt.

Erfindungswesentlich ist hier, dass oberhalb des Filtereinsatzes 10 ein Verschlusselement 41 am Filterträgerelement 40 angeordnet ist. Es besitzt einen radialen Fließkanal 43, der nach unten hin umgelenkt wird und in dem Stützprofil 12 des Filtereinsatzes mündet.

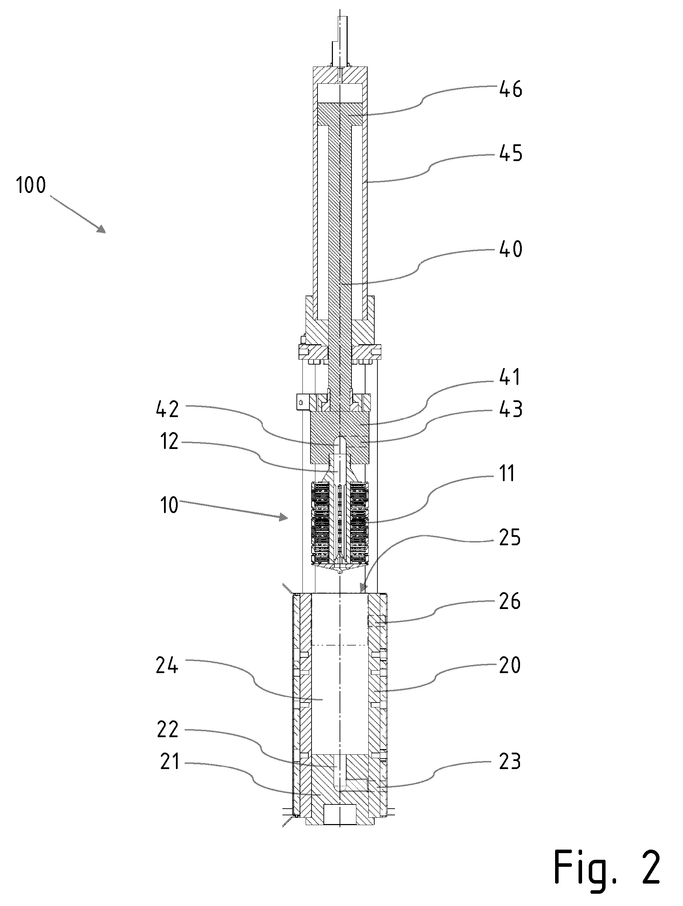

Fig. 2 zeigt dieselbe Filtriervorrichtung 100 im Schnitt. Im oberen Bereich ist die Ausbildung der Antriebseinheit 45 deutlich erkennbar. Das obere Ende des Filterträgerelements 40 ist als Kolben 46 ausgebildet.

Erkennbar sind in Fig. 2 auch die Fließwege im Verschlusselement 41 mit einem axialen Fließkanal 42 und einem radialen Fließkanal 43, der in Überdeckung mit dem gehäuseseitigen Austrittskanal 26 gebracht wird, wenn der Filtereinsatz 10 in die Filterkammer 24 eingeschoben ist. Die Position des Verschlusselements 41 in Produktionsstellung ist durch das strichpunktierte Rechteck angedeutet.

Die Filterkammer 24 ist durch eine Bohrung im Gehäuse 20 gebildet, die aus fertigungstechnischen Gründen zunächst durchgängig gefertigt ist und unten über ein Einsatzelement 21 fest verschlossen worden ist. Ein axialer Fließkanal 22 im Verschlusselement steht mit dem Eintrittskanal 23 im Gehäuse 20 in Verbindung und mündet in der Filterkammer 24.

Nach oben hin ist die Mündung 25 der Gehäusebohrung bzw. der Filterkammer 24 offen, wenn der Filtereinsatz 10 herausgezogen ist.

Erfindungswesentlich ist weiterhin, dass das Stützprofil 12 des Filtereinsatzes 10 zur Mittelachse des Filterträgerelements 40 und dessen Verschieberichtung parallel angeordnet ist, insbesondere mit diesen fluchtend.

Das Verschlusselement 41 wird beim Verschieben des Filterträgerelements 40 mit dem Filtereinsatz 10 zugleich in die Filterkammer 24 abgesenkt, so dass das Verschlusselement 41 die Mündung 25 der nach oben offenen Bohrung dicht verschließt und so eine geschlossene Filterkammer 24 ausgebildet wird.

In der Produktionsstellung befindet sich der Filtereinsatz 10 in der Filterkammer 24 und kann dort frei durchströmt werden. Das Fluid gelangt durch das Filtergewebe der einzelnen Scheibenfilterelemente 11, von dort in das zentrale Stützprofil 12 und dann über die Fließkanäle 42, 43 zum Austrittskanal 26 im Gehäuse 20.

Nach dem Ende des Produktionsbetriebes oder wenn ein Austausch des Filtereinsatzes 10 erforderlich ist, wird das Filterträgerelement 40 mit dem Verschlusselement 41 und dem Filtereinsatz 10 wieder aus der Filterkammer 24 heraus gezogen, so dass deren Mündung 25 wieder offen liegt. Im ausgefahrenen Zustand, wie in Fig. 1 und 2 dargestellt, ist der Filtereinsatz 10 frei zugänglich und kann ausgetauscht oder gewartet werden.

Anstelle des Filtereinsatzes 10 kann auch ein mechanisches Reinigungselement wie ein Schaber oder eine Drahtbürste an das Filterträgerelement 40 angesetzt werden, um die Filterkammer reinigen zu können.

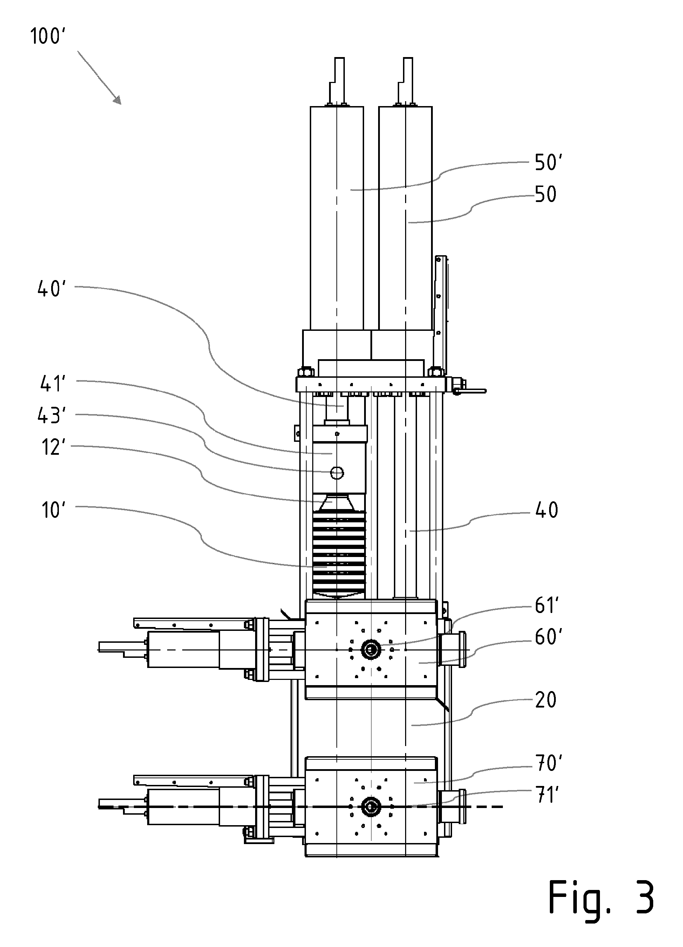

Figur 3 zeigt eine Doppel-Filtriervorrichtung 100', die im Prinzip aus zwei Teil-Filtriervorrichtungen 100 gemäß dem oben unter Bezug auf die Figuren 1 und 2 beschriebenen Ausführungsbeispiel besteht, wobei diese jedoch durch ein gemeinsames Gehäuse 20' verbunden sind.

Die Filterträgerelemente 40, 40' der Doppel-Filtriervorrichtung 100' können einzeln verschoben werden, sodass zum Beispiel einer der Filtereinsätze 10' zur Reinigung aus der Filterkammer 24' herausgefahren werden kann, während der andere im Produktionsbetrieb verbleibt.

Um die Verteilung des Fluids auf die einzelnen Teil-Filtervorrichtungen vorzunehmen, weist die Doppel-filtriervorrichtung 100' zusätzliche Umschaltventile 60', 70' auf.

Mit dem unteren Umschaltventil 70' wird eine Aufteilung des an einem Eintrittskanal 71' zugeleiteten Fluids auf die jeweiligen Filterkammern vorgenommen. An dem Umschaltventil 60' können die einzelnen Fließwege von den Filterkammern zu einem Austrittskanal 61' ebenfalls derart versperrt werden, dass eine der Filterkammern offen liegen kann, während die andere für den Produktionsbetrieb genutzt wird.

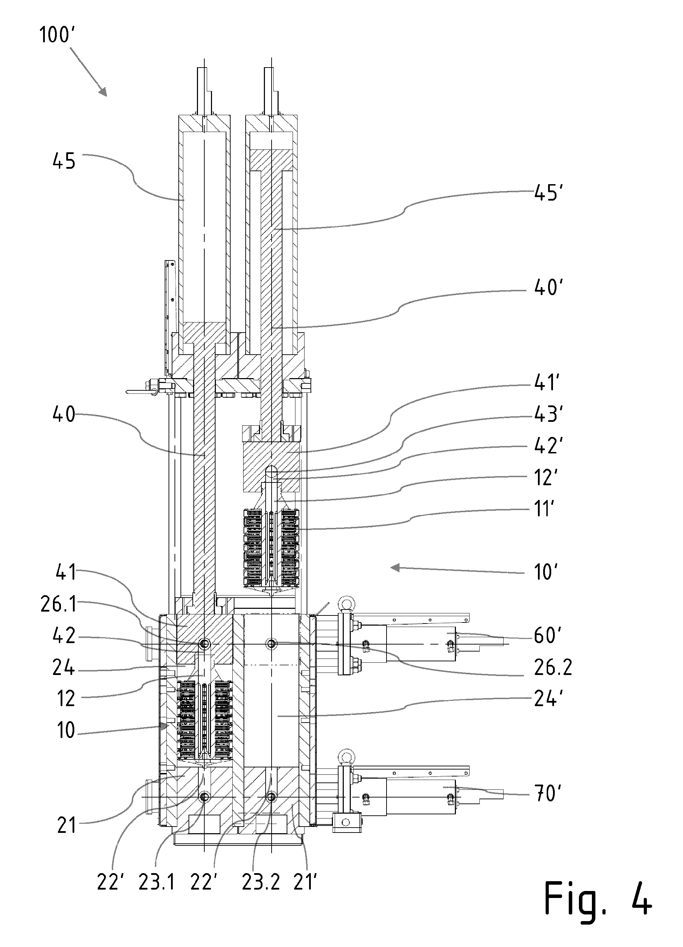

Die genaue Funktionsweise der Filtriervorrichtung 100' ergibt sich aus der Schnittdarstellung nach Fig. 4:
Hier ist die linke Teil-Filtriervorrichtung im Produktionsbetrieb dargestellt. Der Filtereinsatz 10 ist in die Filterkammer 24 abgesenkt. Das Verschlusselement 41 am Filterträgerelement 40 verschließt den oberen Bereich der linken Bohrung im Gehäuse 20', wodurch eine geschlossene Filterkammer 24 ausgebildet wird.

Das Fluid tritt durch einen Eintrittsteilkanal 23.1, der über das Umschaltventil 70' gespeist wird, in den Fließkanal 22 und darüber in die Filterkammer 24. Dort tritt es durch die einzelnen Scheibenfilterelemente 11 des Filtereinsatzes 10 hindurch in das zentrale Stützprofil 12 und über den Fließkanal 42 im Verschlusselement 41 zum Austrittsteilkanal 26.1.

Die rechte Teilfiltriervorrichtung befindet sich in der Wartungsstellung. Die Filterkammer 24' liegt nach oben hin offen. Entsprechende Schaltstellungen an den Umschaltventilen 60', 70' sorgen dafür, dass an den Eintritts- und Austrittsteilkanälen 23.2, 26.2 keine Schmelze oder ein anderes filtriertes Fluid in die Filterkammer 24' austreten kann.

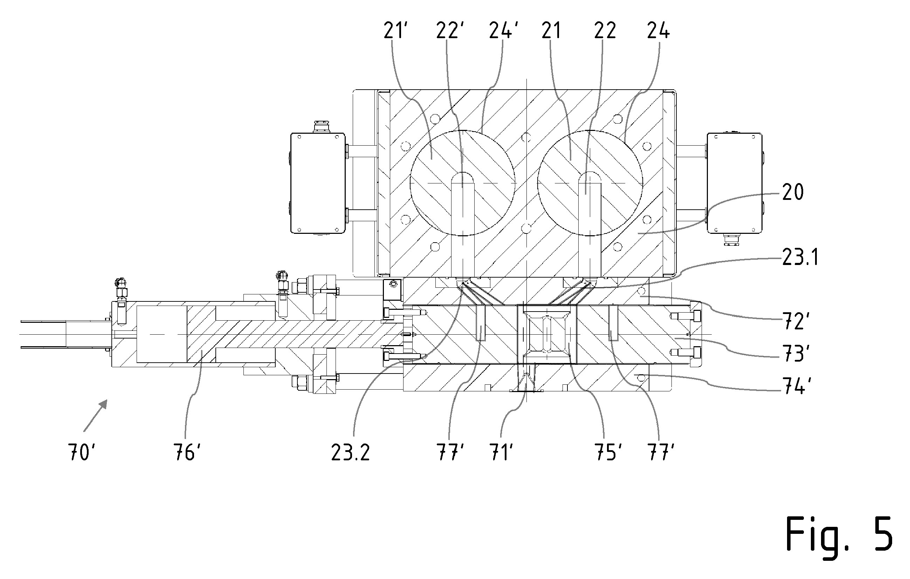

Fig. 5 zeigt einen Schnitt durch das untere Umschaltventil 70' für die einlaufende Strömung und die Fließkanäle im Bodenbereich der Filtriervorrichtung 100'.

Im oberen Teil der Fig. 5 ist der Bodenbereich des Gehäuses 20 geschnitten. Die runden Elemente sind die Verschlusselemente 21, 21' (vgl. Fig. 4,) die es ermöglichen, die Filterkammern 24, 24' jeweils durch eine durchgängige Bohrung im Gehäuse 20' in einfacher Weise zu fertigen und dann das eine Ende dauerhaft durch das eingesetzte Verschlusselement 21, 21' zu verschließen.

Das eigentliche Umschaltventil 70' besteht aus zwei parallelen Platten 72', 74' und einem dazwischen angeordneten Schieber 73', der mittels eines hydraulischen oder pneumatischen Antriebs 76' verschiebbar ist.

Die Platte 72' weist zwei Paare von schräg verlaufenden Teilkanälen auf, die sich jeweils paarweise zu den Eintrittsteilkanälen 23.1, 23.2 vereinigen. In der gegenüberliegenden Platte 74' ist der zentrale Eintrittskanal 71' angeordnet. Der Schieber 73' besitzt eine zentrale Ausnehmung 75', die im Schnittbild nach Figur 5 rechteckig ist und verschiedene Schaltstellungen erlaubt. In einer Draufsicht auf den Eintrittskanal 71' würde die Ausnehmung die Form einer liegenden Acht besitzen. Die drei parallelen, schlitzförmigen Kanäle, die aber über gemeinsame Bereiche an den Plattenoberflächen verbunden sind, ermöglichen eine gezielte Ansteuerung der paarweise zu einem Eintrittsteilkanal zusammenlaufenden Stichkanäle. Rückspülbohrungen 77' im Schieber 73' ermöglichen eine Rückspülung des Filtereinssatzes durch Strömungsumkehr und die Abfuhr des Schmelzekuchens zur Gehäuseaußenseite.

Das obere Umschaltventil 60' ist gleichartig aufgebaut, jedoch sind dort keine Rückspülbohrungen vorgesehen.

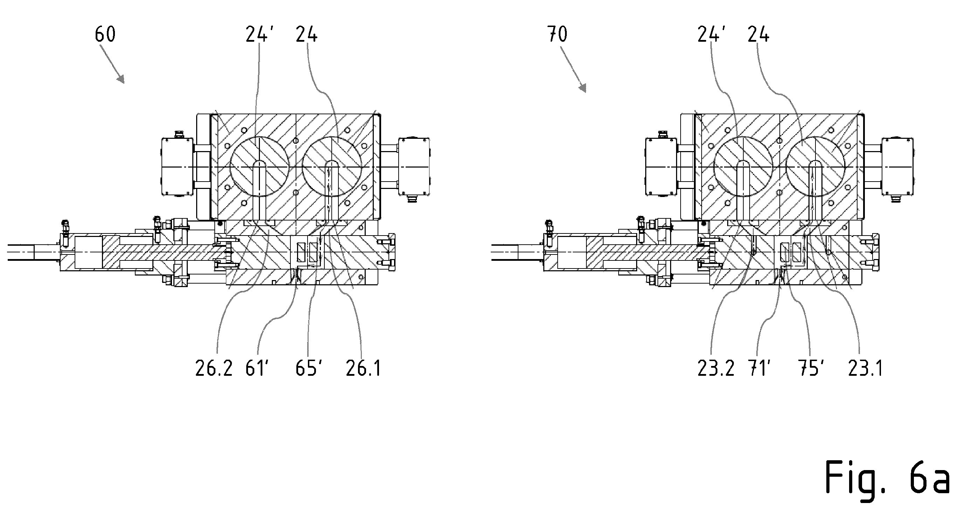

Die wichtigsten Schaltstellungen der Doppel-Filtriervorrichtung 100' sind in den Schnittdarstellungen nach den Fig. 6a bis 6d dargestellt, wobei links jeweils das Austrittsventil 60' und rechts das Eintrittsventil 70' angeordnet ist.

Bei der Stellung nach Fig. 6a wird die rechte Teil-Filtervorrichtung gespeist, indem vom Eintrittskanal 71' aus ein Fließweg zu dem rechten Teilkanal 23.1 hergestellt wird. Gleiches gilt für das links abgebildete Umschaltventil am Austrittskanal 61': Über die Ausnehmung 65' im Schieber wird eine Verbindung zum linken Austrittsteilkanal 26.2 hergestellt, der mit der rechten Filterkammer 24 in Verbindung steht.

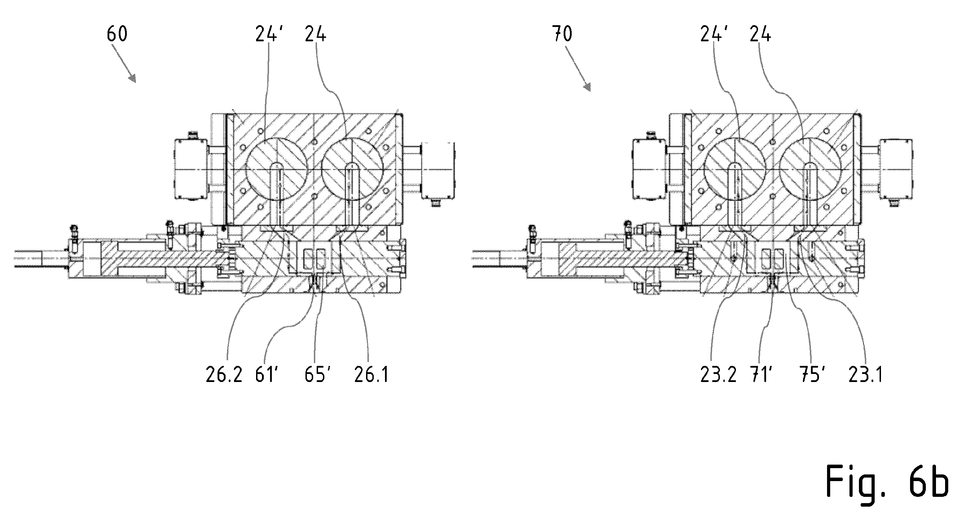

Bei der Stellung nach Fig. 6b werden am Umschaltventil 70' am Eintrittskanal 71' aus beide Teilkanäle 23.1, 23.2 gespeist, und am Umschaltventil 60' stehen beide Teilkanäle 26.1, 26.2 mit dem Austrittskanal 61' in Verbindung. Diese Stellung zeigt den Parallelbetrieb beider Teil-Filtriervorrichtungen, oder er gibt den Moment der Umschaltung von der einen auf die andere Teil-Filtriervorrichtung wieder.

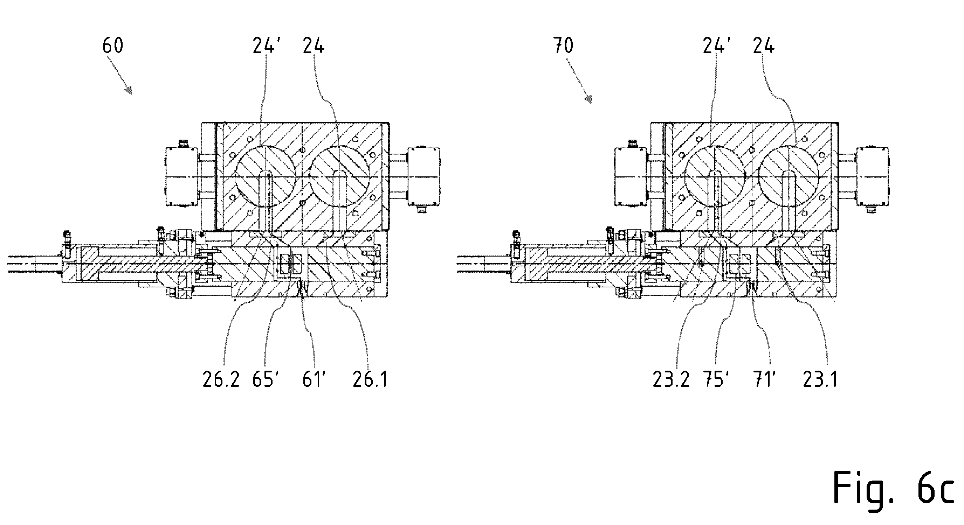

Die Stellung nach Fig. 6c führt am eintrittsseitigen Umschaltventil 70' nur zu einer Speisung des linken Eintrittsteilkanals 23.2 und somit zum Betrieb nur der linken Teil-Filtervorrichtung. An dem austrittsseitigen Umschaltventil 60' ist über den linken Austrittsteilkanal 26.2 ebenfalls nur die linke Teil-Filtervorrichtung mit der Austrittskanal 61' verbunden.

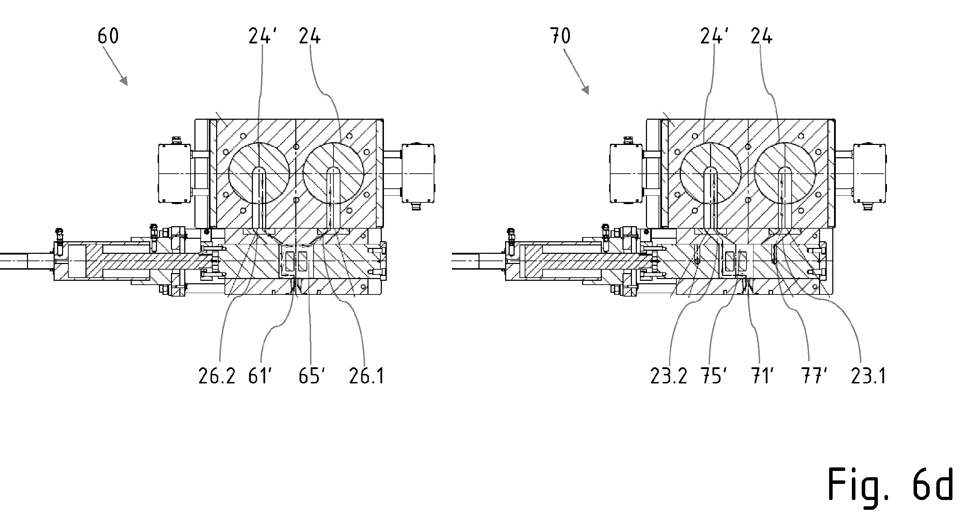

In der Stellung gemäß Fig. 6d wird die Rückspülung für den Filtereinsatz in der rechten Filterkammer 24 bei Aufrechterhaltung der Produktion über den Filtereinsatz in der linken Filterkammer 24' durchgeführt. Die Schmelze fließt vom Eintrittskanal 71' über das Umschaltventil 70 in den linken Teileintrittskanal 23.2 und über die linke Filterkammer 24 zum Schieber des oberen Umschaltventils 60', welches zum Austrittskanal 61' führt. Der Schieber 63' ist derart positioniert, dass er mit seiner Ausnehmung 65' zugleich mit beiden Austrittsteilkanälen 26.1, 26.2 in Verbindung steht, und zwar über den jeweiligen innen liegenden Stichkanal von den beiden V-förmig voneinander abgespreizten Stichkanäle, welche zusammen die Austrittsteilkanale 26.1, 26.1 bilden und welche am Beispiel des Umschaltventils 70' in Figur 5 erkennbar sind.

Gleichzeitig mit der Hauptfließrichtung durch die linke Filterkammer 24' besteht eine Verbindung der Ausnehmung 65' im Schieber 63' zu der rechten Filterkammer 24, so dass also die Schmelze nicht nur direkt zum Austrittskanal 61' abströmt, sondern dass sich auch eine Querströmung zum Teilkanal 26.1 ausbildet. Diese Strömung läuft entgegen der im Produktionsbetrieb gemäß Fig. 6a herrschenden Fließrichtung durch die Filterkammer 24 und den dort befindlichen Filtereinsatz hindurch in den rechten Eintrittsteilkanal 23.1.

Am unteren Umschaltventil 70' kann die Schmelze samt der vom Filtereinsatz abgelösten Schmutzpartikel über den äußeren der beiden Stichkanäle des Eintrittsteilkanals 23.1 in die Rückspülbohrung 77' und darüber zur Außenseite des Umschaltventils 70' abfließen.

## Patentansprüche

1. Filtriervorrichtung (100; 100') zur Großflächenfiltration von Fluiden, insbesondere von Kunststoffschmelzen, die wenigstens umfasst:
- ein Gehäuse (20; 20') mit wenigstens einem Eintrittskanal (23; 71') und wenigstens einem Austrittskanal (26; 61') und
- ein längs zu einer Gehäusebohrung verschiebbares Filterträgerelement (40, 40') mit wenigstens einem Filtereinsatz (10; 10'), welcher in einer Produktionsstellung in einer Filterkammer (24; 24') zwischen dem Eintrittskanal (23; 71') und dem Austrittskanal (26; 61') des Gehäuses (20; 20') anzuordnen ist,
- wobei der Filtereinsatz (10, 10') ein durchströmbares Basiselement (12, 12') aufweist, aus dem heraus ein Fluidstrom auf mehrere Einzelfilterelemente (11, 11') verzweigt bzw. in welchem mehrere Fluidströme aus den Einzelfilterelementen vereinigt werden,
**dadurch gekennzeichnet,**
- **dass** der Filtereinsatz (10, 10') an einer endseitigen Stirnseite des Filterträgerelements (40, 40') angeordnet ist
- **dass** die Filterkammer (24, 24') gebildet ist durch
- eine Gehäusebohrung, die an einem Ende fest verschlossen ist und die sich bis zu einer Mündung (25) an einer Gehäuseaußenseite erstreckt, wobei der Filtereinsatz (10, 10') durch Verschiebung des Filterträgerelements (40, 40') in die Gehäusebohrung einzuschieben ist, und
- ein Verschlusselement (41, 41'), welches beim Absenken des Filterträgerelements (40, 40') in die Gehäusebohrung oder anschließend daran auf die Mündung (25) der Gehäusebohrung aufsetzbar und/oder darin einsetzbar ist.
- **dass** das Verschlusselement (41, 41') am Filterträgerelement (40, 40') wenigstens einen radialen Fließkanal (43) aufweist, der sich in Produktionsstellung mit einem radialen Fließkanal oder einem Ein- oder Austrittskanal (23, 26) im Gehäuse (20, 20') überdeckt und der in einen axialen Fließkanal (42) umgelenkt wird, welcher in den Fließkanal im Basiselement (12; 12') des Filtereinsatzes (10, 10') übergeht.
- **dass** an der der Mündung (25) der Filterkammer (24) gegenüberliegenden Stirnseite der Gehäusebohrung wenigstens ein Fließkanal (22) mündet, mit welchem der Ein- oder Austrittskanal (23, 26) verbunden ist.

2. Filtriervorrichtung (100; 100') nach Anspruch 1, **dadurch gekennzeichnet, dass** das Basiselement des Filtereinsatzes (10, 10') ein Stützprofil ist, das parallel zur Längserstreckung und Vorschubrichtung des Filterträgerelements (40, 40') ausgerichtet ist.

3. Filtriervorrichtung (100; 100') nach Anspruch 2, **dadurch gekennzeichnet, dass** das Stützprofil ein zentral angeordnetes, durchströmbares Achsrohr (12) ist.

4. Filtriervorrichtung (100; 100') nach wenigstens einem der Ansprüche 1 bis 3, **dadurch gekennzeichnet, dass** das Verschlusselement (41, 41') zugleich mit dem Filterträgerelement (40, 40') über dasselbe Antriebselement verschiebbar ist.

5. Filtriervorrichtung (100; 100') nach wenigstens einem der Ansprüche 1 bis 4, **dadurch gekennzeichnet, dass** eine mechanische Reinigungsvorrichtung anstelle des Filtereinsatzes (10, 10') mit dem Filterträgerelement (40, 40') koppelbar ist.

6. Filtriervorrichtung (100') nach wenigstens einem der Ansprüche 1 bis 5, **dadurch gekennzeichnet, dass** die Filtriervorrichtung wenigstens zwei Filterträgerelemente (10, 10') aufweist und in dem Gehäuse (20') eine Filterkammer (24, 24') je Filterträgerelement (10, 10') ausgebildet ist, wobei der Eintrittskanal (71') in wenigstens je einen Eintrittsteilkanal (23.1, 23.2) je Filterkammer (24, 24') verzweigt und von jeder Filterkammer (24, 24') je wenigstens ein Austrittsteilkanal (26.1, 26.2) wegführt, der in dem Austrittskanal (61') mündet.

7. Filtriervorrichtung (100') nach Anspruch 6, **dadurch gekennzeichnet, dass** zwischen der Verzweigungsstelle des Ein- und/oder Austrittskanals (71', 61') in die Teilkanäle (23.1, 23.2, 26.1, 26.2) jeweils ein Umschaltventil (60', 70') angeordnet ist.

8. Filtriervorrichtung (100') nach Anspruch 7, **dadurch gekennzeichnet, dass** wenigstens eines der Umschaltventile (60', 70') einen Schieber (73') umfasst, der mit einer zentralen Ausnehmung (75') zwischen zwei Platten (72', 74') verschiebbar ist, wobei eine der Platten (74') einen zentralen Eintrittskanal (71') bzw. einen zentralen Austrittskanal (61') enthält und die andere Platte (72') wenigstens zwei Eintrittsteilkanäle (23.1', 23.2') bzw. Austrittsteilkanäle enthält.

9. Filtriervorrichtung (100') nach Anspruch 8, **dadurch gekennzeichnet, dass** der Schieber (73') wenigstens eine Rückspülbohrung (77') aufweist.

10. Filtriervorrichtung (100') nach wenigstens einem der vorhergehenden Ansprüche, **dadurch gekennzeichnet, dass** zwischen der Mündung (25) der Gehäusebohrung und dem Verschlusselement (41, 41') ein Kegelsitz zur Abdichtung ausgebildet ist.

## Claims

1. Filtering device (100; 100') for large-scale filtration of fluids, in particular plastics material melts, which comprises at least:
- a housing (20, 20') having at least one inlet channel (23; 71') and at least one outlet channel (26; 61') and
- a filter carrying element (40, 40') which can be displaced longitudinally relative to a housing hole and which has at least one filter insert (10; 10') which is intended to be arranged in a production position in a filter chamber (24; 24') between the inlet channel (23; 71') and the outlet channel (26; 61') of the housing (20; 20'),
- wherein the filter insert (10, 10') has a base element (12, 12') through which flow is possible and from which a fluid flow branches over a plurality of individual filter elements (11, 11') or in which a plurality of fluid flows are combined from the individual filter elements,
**characterised in that**
- the filter insert (10, 10') is arranged at an end-side end face of the filter carrier element (40, 40'),
- **in that** the filter chamber (24, 24') is formed by
- a housing hole which is securely closed at one end and which extends as far as an opening (25) at an outer side of the housing, wherein the filter insert (10, 10') is intended to be inserted into the housing hole by displacing the filter carrier element (40, 40'), and
- a closure element (41, 41') which, when the filter carrier element (40, 40') is lowered, can be placed into the housing hole or subsequently on the opening (25) of the housing hole and/or can be inserted therein,
- **in that** the closure element (41, 41') has on the filter carrier element (40, 40') at least one radial flow channel (43) which overlaps in the production position with a radial flow channel or an inlet or outlet channel (23, 26) in the housing (20, 20') and which is redirected in an axial flow channel (42), which merges into the flow channel in the base element (12; 12') of the filter insert (10, 10'),
- **in that** at least one flow channel (22) to which the inlet or outlet channel (23, 26) is connected opens at the end face of the housing hole opposite the hole (25) of the filter chamber (24).

2. Filtering device (100, 100') according to claim 1, **characterised in that** the base element of the filter insert (10, 10') is a support profile which is orientated parallel with the longitudinal extent and feed direction of the filter carrying element (40, 40').

3. Filtering device (100; 100') according to claim 2, **characterised in that** the support profile is a centrally arranged axial pipe (12) through which flow is possible.

4. Filtering device (100; 100') according to at least one of claims 1 to 3, **characterised in that** the closure element (41, 41') can be displaced at the same time as the filter carrying element (40, 40') via the same drive element.

5. Filtering device (100; 100') according to at least one of claims 1 to 4, **characterised in that** a mechanical cleaning device can be coupled to the filter carrying element (40, 40') in place of the filter insert (10, 10').

6. Filtering device (100') according to at least one of claims 1 to 5, **characterised in that** the filtering device has at least two filter carrying elements (10, 10') and in the housing (20') a filter chamber (24, 24') is formed for each filter carrying element (10, 10'), wherein the inlet channel (71') branches in at least one inlet part-channel (23.1, 23.2) per filter chamber (24, 24') and from each filter chamber (24, 24') there extends away at least one outlet part-channel (26.1, 26.2) which opens in the outlet channel (61').

7. Filtering device (100') according to claim 6, **characterised in that** between the branching location of the inlet and/or outlet channel (71', 61'), a switching valve (60', 70') is arranged in the part-channels (23.1, 23.2, 26.1, 26.2).

8. Filtering device (100') according to claim 7, **characterised in that** at least one of the switching valves (60', 70') comprises a sliding member (73') which can be displaced with a central recess (75') between two plates (72', 74'), wherein one of the plates (74') contains a central inlet channel (71') or a central outlet channel (61') and the other plate (72') contains at least two inlet part-channels (23.1', 23.2') or outlet part-channels.

9. Filtering device (100') according to claim 8, **characterised in that** the sliding member (73') has at least one backwash hole (77').

10. Filtering device (100') according to at least one of the preceding claims, **characterised in that** between the opening (25) of the housing hole and the closure element (41, 41') a conical seat is formed for sealing.

## Revendications

1. Dispositif de filtration (100 ; 100') servant à la filtration à grandes surfaces de fluides, en particulier de matières fondues plastiques, lequel comprend au moins :
- un boîtier (20 ; 20') pourvu au moins d'un canal d'entrée (23 ; 71') et au moins d'un canal de sortie (26 ; 61'), et
- un élément de support de filtre (40, 40') monté coulissant le long d'un alésage de boîtier, pourvu au moins d'un insert de filtre (10 ; 10'), qui est à disposer dans une position de production dans une chambre filtrante (24 ; 24') entre le canal d'entrée (23 ; 71') et le canal de sortie (26 ; 61') du boîtier (20 ; 20'),
- sachant que l'insert de filtre (10, 10') présente un élément de base (12, 12') pouvant être traversé par un flux, à la sortie duquel un flux de fluide bifurque sur plusieurs éléments filtrants individuels (11, 11') ou dans lequel plusieurs flux de fluide provenant des éléments filtrants individuels sont purifiés,
**caractérisé en ce**
- **que** l'insert filtrant (10, 10') est disposé au niveau d'un côté frontal côté extrémité de l'élément de support de filtre (40, 40'),
- en ce que la chambre filtrante (24, 24') est formée par
- - un alésage de boîtier, qui est fermé de manière fixe au niveau d'une extrémité et qui s'étend jusqu'à une embouchure (25) au niveau d'un côté extérieur de boîtier, sachant que l'insert filtrant (10, 10') est à insérer par glissement dans l'alésage de boîtier en faisant coulisser l'élément de support de filtre (40, 40'), et
- - un élément de fermeture (41, 41'), qui peut être posé, lors de l'abaissement de l'élément de support de filtre (40, 40'), dans l'alésage de boîtier ou, immédiatement après, sur l'embouchure (25) de l'alésage de boîtier et/ou y être inséré,
- en ce que l'élément de fermeture (41, 41') présente, au niveau de l'élément de support de filtre (40, 40'), au moins un canal d'écoulement (43) radial, qui se recouvre dans la position de production avec un canal d'écoulement radial ou un canal d'entrée ou de sortie (23, 26) dans le boîtier (20, 20') et qui est dévié dans un canal d'écoulement (42) axial, qui devient le canal d'écoulement dans l'élément de base (12 ; 12') de l'insert filtrant (10, 10'),
- en ce qu'au moins un canal d'écoulement (22) débouche au niveau du côté frontal, faisant face à l'embouchure (25) de la chambre filtrante (24), de l'alésage de boîtier, auquel le canal d'entrée ou de sortie (23, 26) est relié.

2. Dispositif de filtration (100 ; 100') selon la revendication 1, **caractérisé en ce que** l'élément de base de l'insert filtrant (10, 10') est un profil d'appui, qui est orienté de manière parallèle par rapport à l'extension longitudinale et à la direction d'avancement par glissement de l'élément de support de filtre (40, 40').

3. Dispositif de filtration (100 ; 100') selon la revendication 2, **caractérisé en ce que** le profil d'appui est un tube axial (12) pouvant être parcouru par un flux, disposé de manière centrale.

4. Dispositif de filtration (100 ; 100') selon au moins l'une quelconque des revendications 1 à 3, **caractérisé en ce que** l'élément de fermeture (41, 41') peut être déplacé par coulissement simultanément avec l'élément de support de filtre (40, 40') par l'intermédiaire du même élément d'entraînement.

5. Dispositif de filtration (100 ; 100') selon au moins l'une quelconque des revendications 1 à 4, **caractérisé en ce qu'**un dispositif de nettoyage mécanique peut être couplé en lieu et place de l'insert filtrant (10, 10') à l'élément de support de filtre (40, 40').

6. Dispositif de filtration (100') selon au moins l'une quelconque des revendications 1 à 5, **caractérisé en ce que** le dispositif de filtration présente au moins deux éléments de support de filtre (10, 10'), et **en ce qu'**une chambre filtrante (24, 24') par élément de support de filtre (10, 10') est réalisée dans le boîtier (20'), sachant que le canal d'entrée (71') bifurque dans au moins respectivement un canal partiel d'entrée (23.1, 23.2) par chambre filtrante (24, 24') et que respectivement au moins un canal partiel de sortie (26.1, 26.2) part de chaque chambre filtrante (24, 24'), lequel canal partiel de sortie débouche dans le canal de sortie (61').

7. Dispositif de filtration (100') selon la revendication 6, **caractérisé en ce que** respectivement une soupape de commutation (60', 70') est disposée entre l'emplacement de bifurcation du canal d'entrée et/ou de sortie (71', 61') dans les canaux partiels (23.1, 23.2, 26.1, 26.2).

8. Dispositif de filtration (100') selon la revendication 7, **caractérisé en ce qu'**au moins une des soupapes de commutation (60', 70') comprend un coulisseau (73'), monté coulissant avec un évidement (75') central entre deux plaques (72', 74'), sachant qu'une des plaques (74') contient un canal d'entrée (71') central ou un canal de sortie (61') central et que l'autre plaque (72') contient au moins deux canaux partiels d'entrée (23.1', 23.2') ou canaux partiels de sortie.

9. Dispositif de filtration (100') selon la revendication 8, **caractérisé en ce que** le coulisseau (73') présente au moins un alésage à lavage à contre-courant (77').

10. Dispositif de filtration (100') selon au moins l'une quelconque des revendications précédentes, **caractérisé en ce qu'**un siège conique servant à l'étanchéification est réalisé entre l'embouchure (25) de l'alésage de boîtier et l'élément de fermeture (41, 41').
